# EUROPÄISCHE PATENTANMELDUNG

(11) **EP 4 516 563 A1**
(43) Veröffentlichungstag der Anmeldung: **05.03.2025**
(21) Anmeldenummer: 23195205.2
(22) Anmeldetag: 04.09.2023
(51) Int. Cl.: B60L 5/26, B60L 7/14, B60L 9/18, B60L 9/24, B60L 50/51, B60L 50/53, B61C 3/02, B60L 9/30, H02J 7/00, H02J 7/14

(54) **SCHIENENFAHRZEUG UMFASSEND EINE ENERGIEVERSORGUNGSEINHEIT MIT EINEM TRAKTIONSTRANSFORMATOR UND EINER TRAKTIONSBATTERIE SOWIE VERFAHREN ZUM OPTIMIERTEN LADEN EINER TRAKTIONSBATTERIE**

(71) Anmelder: Stadler Rail AG, 9565 Bussnang (CH)
(72) Erfinder: Falke, Ewald, 9000 St. Gallen (CH)
(74) Vertreter: Hepp Wenger Ryffel AG

(57) **Zusammenfassung**

Die Erfindung betrifft ein Schienenfahrzeug (15) mit einer Energieversorgungseinheit (21). Die Energieversorgungseinheit (21) umfasst einen Traktionstransformator (3), eine Traktionsbatterie (4) sowie einen Stromabnehmer (6, 10). Ferner umfasst das Schienenfahrzeug (15) ein Traktionssystem (5). Zwischen dem Traktionstransformator (3) und der Traktionsbatterie (4) ist ein bidirektionaler Batteriewechselrichter (2) angeordnet. Zwischen dem bidirektionalen Batteriewechselrichter (2) und der Traktionsbatterie (4) ist ein erster Gleichstromzwischenkreis (24) ausgebildet. Zwischen dem Traktionstransformator (3) und dem Traktionssystem (5) ist ein bidirektionaler Traktionswechselrichter (1) angeordnet. Dadurch entsteht ein zweiter Gleichstromzwischenkreis (25) zwischen dem Traktionssystem (5) und dem bidirektionalen Traktionswechselrichter (1).

Die Erfindung betrifft ausserdem ein Verfahren zum optimierten Laden einer Traktionsbatterie (4) sowie zum optimierten Fahren eines Schienenfahrzeugs (15) mit Batteriestrom.

## Beschreibung

Die Erfindung betrifft ein Schienenfahrzeug umfassend eine Energieversorgungseinheit mit einem Traktionstransformator sowie einer Traktionsbatterie sowie ein Verfahren zum optimierten Laden einer Traktionsbatterie.

Schienenfahrzeuge, welche über eine Oberleitung und mittels Batterien betrieben werden können, sind bekannt. Das Dokument EP 3 023 291 offenbart ein Schienenfahrzeug, bei dem die Traktionsbatterien mittels eines DC/DC-Wandlers an den Gleichstromzwischenkreis angeschlossen sind. Auf diese Weise wird der Traktionsumrichter mit Energie für die Traktion versorgt. Aus dem Dokument EP 3 617 025 A1 ist ein Schienenfahrzeug bekannt, bei dem durch eine Batterie Energie für einen Notantrieb bereitgestellt wird. Für dauerhaftes Fahren unter Batterie ist das Fahrzeug jedoch weder vorgesehen noch geeignet.

Die aus dem Stand der Technik bekannten Schienenfahrzeuge weisen den Nachteil auf, dass pro Zeiteinheit nur eine sehr begrenzte Menge Energie von den Traktionsmotoren zu der Batterie oder von der Batterie zu den Traktionsmotoren übertragen werden kann.

Es ist daher die Aufgabe der Erfindung, die Nachteile des Standes der Technik zu überwinden und insbesondere ein Schienenfahrzeug mit einem Traktionsmotor und einer Traktionsbatterie zu schaffen, bei welchem pro Zeiteinheit eine hohe Leistung von einer Traktionsbatterie zu einem Fahrmotor und/oder von einem Fahrmotor zu einer Traktionsbatterie übertragen werden kann.

Die Aufgabe wird durch ein Schienenfahrzeug umfassend eine Energieversorgungseinheit mit einem Traktionstransformator und einer Traktionsbatterie sowie durch ein Verfahren zum optimierten Laden einer Traktionsbatterie gemäss den unabhängigen Patentansprüchen gelöst.

Die Aufgabe wird insbesondere durch ein Schienenfahrzeug umfassend eine Energieversorgungseinheit gelöst. Die Energieversorgungseinheit umfasst einen Traktionstransformator, eine Traktionsbatterie sowie einen Stromabnehmer. Das Schienenfahrzeug umfasst ausserdem ein Traktionssystem. Zwischen dem Traktionstransformator und der Traktionsbatterie ist ein bidirektionaler Batteriewechselrichter angeordnet. Dadurch wird ein erster Gleichstromzwischenkreis zwischen dem bidirektionalen Batteriewechselrichter und der Traktionsbatterie gebildet. Zwischen dem Traktionstransformator und dem Traktionssystem ist ein bidirektionaler Traktionswechselrichter angeordnet. Dadurch wird ein zweiter Gleichstromzwischenkreis zwischen dem Traktionssystem und dem bidirektionalen Traktionswechselrichter gebildet.
Es ist möglich, dass der Traktionstransformator einen Pulverkern und/oder einen Ferritkern aufweist. Es ist möglich, dass das Schienenfahrzeug einen zweipoligen DC-Bus aufweist, welcher an das Traktionssystem angeschlossen ist.

In einem derartigen Schienenfahrzeug ist es möglich, die Frequenz des Wechselstromes zwischen dem bidirektionalen Traktionswechselrichter und dem Traktionstransformator sowie zwischen dem Batteriewechselrichter und dem Traktionstransformator unabhängig voneinander einzustellen und beispielsweise im Vergleich zu dem Bahnstrom zu erhöhen. Dadurch kann pro Zeiteinheit eine hohe Leistung von der Traktionsbatterie zu dem Traktionssystem oder von dem Traktionssystem zu der Traktionsbatterie übertragen werden.

Es ist möglich, dass ein Schienenfahrzeug mehrere Energieversorgungseinheiten und/oder Traktionssysteme umfasst. Es ist möglich, dass in einem Schienenfahrzeug pro Traktionssystem ein Gleichstromzwischenkreis sowie ein Traktionswechselrichter ausgebildet ist. Es ist möglich, dass in einem Schienenfahrzeug pro Traktionssystem ein Traktionswechselrichter und eine Traktionsbatterie ausgebildet ist. Es ist auch möglich, dass in einem Schienenfahrzeug ein Traktionswechselrichter und eine Traktionsbatterie ausgebildet ist, welche Energie für mehrere Traktionssysteme bereitstellen. Es ist möglich, dass eine Energieversorgungseinheit sowie ein Traktionssystem auf einem Schienenfahrzeugwagen angeordnet sind. Dann ist sowohl die Energieversorgung als auch die Traktion auf einem Schienenfahrzeugwagen gebündelt.

Es ist möglich, dass die Energieversorgungseinheit in einem Energieversorgungswagen angeordnet ist.

Durch eine solche Anordnung ist es möglich, die Traktionsbatterie des Schienenfahrzeugwagens mit der Energieversorgungseinheit auf dem Energieversorgungswagen unabhängig von anderen Schienenfahrzeugwagen aufzuladen.

Es ist möglich, dass der Energieversorgungswagen als Powerpack ausgebildet ist. Dann weist der Energieversorgungswagen keine Sitzplätze für Passagiere auf. Auch wenn der Energieversorgungswagen als Powerpack ausgebildet ist, können Passagiere von einem Schienenfahrzeugwagen, der vor dem Powerpack angeordnet ist, in einen Schienenfahrzeugwagen, welcher hinter dem Powerpack angeordnet ist, gelangen, beispielsweise durch einen Mittelgang. Es ist auch möglich, dass sich Passagiere in einem Energieversorgungswagen, welcher als Powerpack ausgebildet ist, aufhalten, beispielsweise in einem Mittelgang. Allerdings weist ein Powerpack keine Bereiche auf, die für den dauerhaften Aufenthalt von Passagieren bestimmt sind.

Es ist möglich, den Energieversorgungswagen von anderen Schienenfahrzeugwagen abzukoppeln und im abgekoppelten Zustand durch den Stromabnehmer aufzuladen. Durch eine solche Anordnung ist es ausserdem möglich, den Energieversorgungswagen für Wartungs- und/oder Reparaturarbeiten von einem Schienenfahrzeug abzukoppeln und in einer Werkstatt, wo die entsprechenden Gerätschaften und Werkzeuge vorhanden sind, zu reparieren und/oder zu warten. In der Schienenfahrzeugkomposition kann der zu wartende Schienenfahrzeugwagen durch einen anderen, funktionstüchtigen, Energieversorgungswagen ersetzt werden. Durch eine derartige Anordnung sind entsprechende Schienenfahrzeuge somit vorteilhaft betreibbar und ein derartiger Energieversorgungswagen kann vorteilhaft gewartet und repariert werden.

Es ist möglich, dass die Energieversorgungseinheit auf einem Schienenfahrzeugwagen angeordnet ist und das Traktionssystem auf einem anderen Schienenfahrzeugwagen angeordnet ist. Es ist möglich, dass der Energieversorgungswagen nicht mit einem Traktionssystem ausgestattet ist und, insbesondere sämtliche, andere Schienenfahrzeugwagen des Schienenfahrzeugs mit mindestens einem Traktionssystem ausgestattet sind.

Es ist möglich, dass das Traktionssystem einen Traktionsmotor und einen zweiten bidirektionalen Traktionswechselrichter umfasst. Der zweite bidirektionale Traktionswechselrichter kann zwischen dem Traktionsmotor und dem zweiten Gleichstromzwischenkreis angeordnet sein.

Durch das Ausbilden von zwei bidirektionalen Traktionswechselrichtern ist es möglich, die Energie effizient zu übertragen und den Traktionsmotor mit einer für den Traktionsmotor vorteilhaften Wechselspannung zu versorgen.

Es ist möglich, dass der Stromabnehmer ein Wechselstrom-Stromabnehmer ist. Der Wechselstrom-Stromabnehmer kann mit dem Traktionstransformator verbunden oder verbindbar sein.

Durch das Anordnen eines Wechselstrom-Stromabnehmers ist es möglich, das Schienenfahrzeug mit dem elektrischen Strom aus einer Wechselstromoberleitung zu versorgen.

Es ist möglich, dass der Stromabnehmer ein Gleichstrom-Stromabnehmer ist. Der Gleichstrom-Stromabnehmer ist mit dem zweiten Gleichstromzwischenkreis verbunden oder verbindbar.

Durch das Anordnen eines Gleichstromstromabnehmers ist es möglich, das Schienenfahrzeug mit Gleichstrom zu versorgen. Somit kann das Schienenfahrzeug auch in einem Schienenfahrzeugnetz betrieben werden, an dem Gleichstrom zur Verfügung steht.

Es ist möglich, dass das Schienenfahrzeug einen Wechselstrom-Stromabnehmer und einen Gleichstrom-Stromabnehmer aufweist.

Dann kann das Schienenfahrzeug sowohl mit Wechselstrom als auch mit Gleichstrom betrieben werden. Dadurch ist das Schienenfahrzeug äusserst flexibel einsetzbar und es ist möglich, mit dem Schienenfahrzeug von einem Gleichstromnetz in ein Wechselstromnetz oder von einem Wechselstromnetz in ein Gleichstromnetz zu fahren.

Es ist möglich, dass das Schienenfahrzeug einen Systemwahlschalter aufweist. Der Systemwahlschalter kann zwischen dem Gleichstrom-Stromabnehmer und dem zweiten Gleichstromzwischenkreis angeordnet sein.

Durch die Anordnung eines Systemwahlschalters ist es möglich, das Schienenfahrzeug sicher und unkompliziert vom Gleichstrombetrieb auf Wechselstrombetrieb oder vom Wechselstrombetrieb auf Gleichstrombetrieb zu schalten.

Es ist möglich, dass der Traktionstransformator eine zweite sekundäre Wicklung umfasst. Die zweite sekundäre Wicklung kann auf eine Wechselspannung von 1 kV oder 1.5 kV ausgelegt sein.

Durch die Anordnung einer zweiten sekundären Wicklung an dem Traktionstransformator ist es möglich, an die zweite sekundäre Wicklung eine Zugsammelschiene anzuschliessen. Dadurch ist es möglich, über die Zugsammelschiene und die zweite sekundäre Wicklung des Transformators Energie auf die Traktionsbatterie zu übertragen. Dann kann die Traktionsbatterie über die Zugsammelschiene aufgeladen werden, beispielsweise durch einen externen Stromanschluss in einer Werkstatt, einen mobilen Generator oder durch einen anderen Schienenfahrzeugwagen mit einer Traktionsbatterie und/oder einem Stromabnehmer oder durch ein anderes Schienenfahrzeug mit einer Traktionsbatterie und/oder einem Stromabnehmer. Es ist auch möglich, Energie von der Traktionsbatterie auf der Zugsammelschiene bereitzustellen und damit über die Zugsammelschiene Energie auf einen anderen Schienenfahrzeugwagen zu übertragen.

Es ist möglich, dass eine Erdverbindung des Traktionstransformators trennbar ausgebildet ist.

Durch eine derartige trennbare Ausbildung kann die Erdverbindung abhängig vom Betriebsmodus und den lokal zulässigen Störstromemissionen verbunden oder getrennt werden. Auf diese Weise ist ein vorteilhafter Betrieb des Schienenfahrzeugs unter wechselnden Rahmenbedingungen möglich.

Die Aufgabe der Erfindung wird ausserdem durch ein Verfahren zum optimierten Laden einer Traktionsbatterie sowie zum optimierten Fahren eines Schienenfahrzeugs mit Batteriestrom gelöst. Bei dem Schienenfahrzeug handelt es sich um ein Schienenfahrzeug wie vorhergehend beschrieben. Die Traktionsbatterie kann über einen ersten Gleichstromzwischenkreis geladen und entladen werden. Das Traktionssystem kann über einen zweiten Gleichstromzwischenkreis mit Energie versorgt werden. Der erste Gleichstromzwischenkreis und der zweite Gleichstromzwischenkreis können durch einen Traktionstransformator getrennt sein. Bei einer Ladung der Traktionsbatterie und/oder bei einer Versorgung des Traktionssystems mit elektrischer Energie kann die Frequenz des Stromes zwischen bidirektionalem Batteriewechselrichter und Traktionstransformator und/oder zwischen bidirektionalem Traktionswechselrichter und Traktionstransformator von der Bahnstromfrequenz unterschiedlich sein. Die Frequenz kann höher als die Bahnstromfrequenz sein. Die Frequenz kann mindestens 400 Hz betragen. Die Frequenz kann mehr als 1 kHz betragen.

Es ist möglich, dass die Traktionsbatterie durch Bremsenergie aus dem Traktionssystem über den bidirektionalen Traktionswechselrichter, den Traktionstransformator und den bidirektionalen Batteriewechselrichter geladen wird. Es ist möglich, dass das Traktionssystem durch elektrische Energie aus der Traktionsbatterie versorgt wird.

Durch ein derartiges Verfahren ist es möglich, pro Zeiteinheit eine hohe Leistung von der Traktionsbatterie auf das Traktionssystem oder von dem Traktionssystem zu der Traktionsbatterie zu übertragen und Verluste zu minimieren.

Bahnstrom ist Wechselstrom zur Versorgung eines Schienenfahrzeuges aus einer Oberleitung oder Zugsammelschiene mit einer Spannung und Frequenz, die in der EN 50163 sowie in der IEC 60850 definiert sind, insbesondere mit einer Spannung von 15 kV und einer Bahnstromfrequenz von beispielsweise 16,7 Hz. Wenn die Frequenz höher ist als die Bahnstromfrequenz bedeutet dies somit, dass die Frequenz über der Bahnstromfrequenz des Bahnstroms liegt.

Es ist möglich, dass mehrere Traktionsbatterien durch ein Traktionssystem geladen werden. Es ist auch möglich, dass ein Traktionssystem durch Energie aus mehreren Traktionsbatterien angetrieben wird. Ein solches Verfahren weist im Wesentlichen dieselben Vorteile auf wie ein Schienenfahrzeug wie vorhergehend beschrieben.

Es ist möglich, dass die Traktionsbatterie durch Energie aus der Oberleitung über den Stromabnehmer geladen wird.

Es ist auch möglich, dass die Traktionsbatterie über den Wechselstrom-Stromabnehmer geladen wird. Dann wird die Energie von dem Wechselstrom-Stromabnehmer über den Traktionstransformator und den bidirektionalen Batteriewechselrichter auf die Traktionsbatterie übertragen.

Somit ist es möglich, das Schienenfahrzeug vorteilhaft durch eine externe Energiequelle, die üblicherweise in Eisenbahnnetzen vorhanden ist, zu laden.

Es ist möglich, dass der Traktionstransformator eine zweite sekundäre Wicklung umfasst, wobei die zweite sekundäre Wicklung mit einer Zugsammelmaschine verbunden ist und das Schienenfahrzeug über die Zugsammelschiene mit dem elektrischen Strom versorgt wird.

Die zweite sekundäre Wicklung kann auf 1 kV oder 1.5 kV Wechselspannung ausgelegt sein.

Ein solcher Verfahrensschritt hat im Wesentlichen dieselben Vorteile wie ein Schienenfahrzeug wie vorhergehend beschrieben.

Es ist möglich, dass das Schienenfahrzeug wahlweise über den Wechselstrom-Stromabnehmer oder über den Gleichstrom-Stromabnehmer mit Energie versorgt wird.

Durch diesen Verfahrensschritt ist es möglich, das Schienenfahrzeug sowohl in einem Wechselstromnetz als auch in einem Gleichstromnetz zu betreiben. Durch ein derartigen Verfahrensschritt ist das Schienenfahrzeug somit flexibel einsetzbar.

Es ist möglich, dass die Energie für die Traktion des Schienenfahrzeugs wahlweise durch den Stromabnehmer oder durch die Traktionsbatterie bereitgestellt wird.

Ein solcher Verfahrensschritt hat im Wesentlichen dieselben Vorteile wie vorhergehend beschrieben.

Es ist möglich, dass der zweite Gleichstromzwischenkreis direkt mit der Energie aus dem Gleichstrom-Stromabnehmer versorgt wird.

Durch einen solchen Verfahrensschritt kann das Schienenfahrzeug in einem Gleichstromnetz unkompliziert und zuverlässig mit Gleichstrom betrieben werden.

Die Erfindung wird anhand der Figuren detailliert erläutert. Die Figuren zeigen:
- Figur 1:: Einen Schienenfahrzeugwagen mit einer Energieversorgungseinheit und einem Traktionssystem,
- Figur 2:: ein Schienenfahrzeug mit einem Energieversorgungswagen.

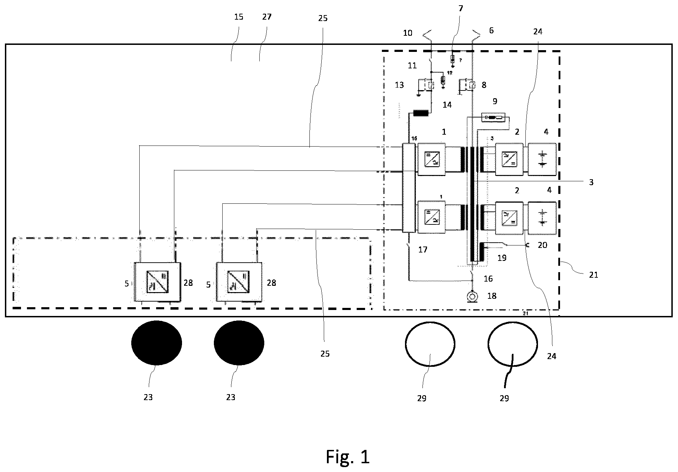

Figur 1 zeigt ein Schienenfahrzeug 15 mit einem Schienenfahrzeugwagen 27. Der Schienenfahrzeugwagen 27 weist mehrere Räder 23 auf. Jedes der angetriebenen Räder 23 ist wirktechnisch mit einem Traktionssystem 5 verbunden. Der Schienenfahrzeugwagen 27 weist mehrere nicht angetriebene Räder 29 auf. Das Schienenfahrzeug 15 umfasst zwei Traktionssysteme 5. Die Traktionssysteme 5 sind jeweils über einen zweiten bidirektionalen Traktionswechselrichter 28 sowie einen zweiten Gleichstromzwischenkreis 25 an jeweils einen ersten bidirektionalen Traktionswechselrichter 1 angeschlossen. Die ersten bidirektionalen Traktionswechselrichter 1 sind mit dem Traktionstransformator 3 verbunden. Der Traktionstransformator 3 weist einen Störstromfilter 9 auf. Die sekundäre Seite des Traktionstransformators 3 ist mit zwei Batteriewechselrichtern 2 verbunden. Die beiden Batteriewechselrichter 2 sind jeweils über einen ersten Gleichstromzwischenkreis 24 mit einer Traktionsbatterie 4 verbunden. Die Sekundärseite des Traktionstransformators 3 weist ausserdem eine zweite sekundäre Wicklung 19 auf. Die zweite sekundäre Wicklung 19 ist mit der Zugsammelschiene 20 verbunden. Die Energieversorgungseinheit 21 weist ausserdem eine Erdverbindung 18 auf. Die Erdverbindung 18 ist durch einen ersten Schalter 16 trennbar mit dem Traktionstransformator 3 verbunden. Die Erdverbindung 18 ist ausserdem durch einen zweiten Schalter 17 trennbar mit den beiden zweiten Gleichstromzwischenkreisen 25 verbunden. Die beiden zweiten Gleichstromzwischenkreise 25 der Energieversorgungseinheit 21 sind über eine Netzfilterdrossel 14, welche eine Erdung 13 aufweist, sowie über den Systemwahlschalter 11 mit dem DC-Stromabnehmer 10 verbunden. Die Energieversorgungseinheit 21 weist ausserdem einen Überspannungsableiter 7 auf. Der Traktionstransformator 3 ist über den Hauptschalter 8 mit dem AC-Stromabnehmer 6 verbunden.

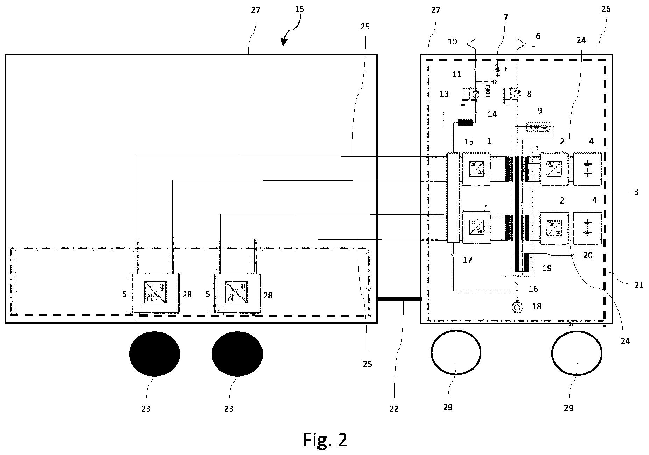

Die Figur 2 zeigt ein Schienenfahrzeug 15 analog zu der Figur 1. Anders als in der Figur 1 weist das Schienenfahrzeug 15 aus der Figur 2 zwei Schienenfahrzeugwagen 27 auf. Die Schienenfahrzeugwagen 27 sind durch eine Kupplung 22 verbunden. Ein Schienenfahrzeugwagen 27 weist die Energieversorgungseinheit 21 auf. Der Schienenfahrzeugwagen 27 mit der Energieversorgungseinheit 21 ist als Energieversorgungswagen 26 ausgebildet. Der Energieversorgungswagen 26 weist mehrere nicht angetriebene Räder 29 auf. An den Energieversorgungswagen 26 mit der Kupplung 22 ist ein weiterer Schienenfahrzeugwagen 27 angekoppelt. Der weitere Schienenfahrzeugwagen 27 weist mehrere angetriebene Räder 23 auf. Die angetriebenen Räder 23 sind jeweils wirktechnisch mit einem Traktionssystem 5 gekoppelt. Die beiden Traktionssysteme 5 des angetriebenen Schienenfahrzeugwagens 27 sind jeweils über einen zweiten bidirektionalen Traktionswechselrichter 28 mittels eines zweiten Gleichstromzwischenkreises 25 mit einem ersten bidirektionalen Traktionswechseltrichter 1 des Energieversorgungswagens 26 gekoppelt. Die angetriebenen Räder 23 des angetriebenen Schienenfahrzeugwagens 27 werden mit Energie aus den Traktionsbatterien 4 des Energieversorgungswagens 26 gespeist. Im Bremsbetrieb ist es ausserdem möglich, die Traktionsbatterien 4 des Energieversorgungswagens 26 mit Bremsenergie der Traktionssysteme 5 aus dem angetriebenen Schienenfahrzeugwagen 27 zu speisen. Es ist möglich, dass ein Schienenfahrzeug 15 mehrere Energieversorgungswagen 26 sowie mehrere Schienenfahrzeugwagen umfasst, welche keine Energieversorgungswagen 26 sind. Es ist möglich, dass der Energieversorgungswagen 26 mehrere andere Schienenfahrzeugwagen 27, die jeweils Traktionssysteme 5 aufweisen, mit Energie speist. Es ist möglich, dass der Energieversorgungswagen 26 keine Sitzplätze für Passagiere aufweist. Dann ist der Energieversorgungswagen 26 als Powerpack ausgebildet. Auf diese Weise ist es möglich, den Energieversorgungswagen 26, welcher als Powerpack ausgebildet ist, aus einer Schienenfahrzeugkomposition für Reparatur- und/oder Wartungsarbeiten zu entfernen. Ausserdem kann ein Energieversorgungswagen 26, welcher als Powerpack ausgebildet ist, aus einer Schienenfahrzeugkomposition entfernt und durch eine externe Stromquelle aufgeladen werden. Ein Energieversorgungswagen 26 kann ein Mittelwagen sein. Ein Energieversorgungswagen 26 kann auch ein Endwagen sein. Es ist möglich, dass ein Schienenfahrzeugwagen 27, welcher Traktionssysteme 5 aufweist, mit Sitzplätzen für Passagiere ausgebildet ist.

## Patentansprüche

1. Schienenfahrzeug (15) umfassend eine Energieversorgungseinheit (21), die einen Traktionstransformator (3), eine Traktionsbatterie (4) sowie einen Stromabnehmer (6,10) umfasst, und ein Traktionssystem (5), wobei ein bidirektionaler Batteriewechselrichter (2) zwischen Traktionstransformator (3) und Traktionsbatterie (4) angeordnet ist, so dass ein erster Gleichstromzwischenkreis (24) zwischen dem bidirektionalen Batteriewechselrichter (2) und der Traktionsbatterie (4) gebildet ist, **dadurch gekennzeichnet, dass** ein bidirektionaler Traktionswechselrichter (1) zwischen Traktionstransformator (3) und Traktionssystem (5) angeordnet ist, so dass ein zweiter Gleichstromzwischenkreis (25) zwischen Traktionssystem (5) und bidirektionalem Traktionswechselrichter (1) gebildet ist, wobei der Traktionstransformator (3) insbesondere einen Pulverkern und/oder Ferritkern aufweist und das Schienenfahrzeug (15) bevorzugt einen 2-poligen DC-Bus aufweist, welcher an das Traktionssystem (5) angeschlossen ist.

2. Schienenfahrzeug nach Anspruch 1, **dadurch gekennzeichnet, dass** die Energieversorgungseinheit (21) in einem Energieversorgungswagen (26) angeordnet ist.

3. Schienenfahrzeug (15) nach einem der vorhergehenden Ansprüche, **dadurch gekennzeichnet, dass** das Traktionssystem (5) einen Traktionsmotor und einen zweiten bidirektionalen Traktionswechselrichter (28) umfasst, wobei der zweite bidirektionale Traktionswechselrichter (28) zwischen Traktionsmotor und zweitem Gleichstromzwischenkreis (25) angeordnet ist.

4. Schienenfahrzeug (15) nach einem der vorhergehenden Ansprüche, **dadurch gekennzeichnet, dass** der Stromabnehmer (6) ein Wechselstrom-Stromabnehmer (6) ist, der mit dem Traktionstransformator (3) verbunden oder verbindbar ist.

5. Schienenfahrzeug (15) nach einem der Ansprüche 1-3, **dadurch gekennzeichnet, dass** der Stromabnehmer (10) ein Gleichstrom-Stromabnehmer (10) ist, der mit dem zweiten Gleichstromzwischenkreis (25) verbunden oder verbindbar ist.

6. Schienenfahrzeug (15) nach Anspruch 4 und 5, **dadurch gekennzeichnet, dass** ein Wechselstrom-Stromabnehmer (6) und ein Gleichstrom-Stromabnehmer (10) ausgebildet sind.

7. Schienenfahrzeug (15) nach Anspruch 6, **dadurch gekennzeichnet, dass** ein Systemwahlschalter (11) ausgebildet ist, insbesondere ein Systemwahlschalter (11) zwischen Gleichstrom-Stromabnehmer (10) und zweitem Gleichstromzwischenkreis (25) .

8. Schienenfahrzeug (15) nach einem der vorhergehenden Ansprüche, **dadurch gekennzeichnet, dass** der Traktionstransformator (3) eine zweite sekundäre Wicklung (19) umfasst, die insbesondere auf 1kV oder 1.5kV Wechselspannung ausgelegt ist.

9. Schienenfahrzeug (15) nach einem der vorhergehenden Ansprüche, **dadurch gekennzeichnet, dass** eine Erdverbindung (18) des Traktionstransformators (3) trennbar ausgebildet ist.

10. Verfahren zum optimierten Laden einer Traktionsbatterie (4) sowie optimierten Fahren mit Batteriestrom eines Schienenfahrzeuges (15) nach einem der vorhergehenden Ansprüche, **dadurch gekennzeichnet, dass** die Traktionsbatterie (4) über einen ersten Gleichstromzwischenkreis (24) geladen und entladen wird und das Traktionssystem (5) über einen zweiten Gleichstromzwischenkreis (25) mit Energie versorgt wird, wobei die Gleichstromzwischenkreise (24, 25) durch den Traktionstransformator (3) getrennt sind, wobei sich bei einer Ladung der Traktionsbatterie (4), insbesondere durch Bremsenergie aus dem Traktionssystem (5) über den bidirektionalen Traktionswechselrichter (1), den Traktionstransformator (3) und den bidirektionalen Batteriewechselrichter (2), und/oder bei einer Versorgung des Traktionssystems (5) mit elektrischer Energie, bevorzugt durch elektrische Energie aus der Traktionsbatterie (4), die Frequenz des Stromes zwischen bidirektionalem Batteriewechselrichter (1) und Traktionstransformator (3) und/oder zwischen bidirektionalem Traktionswechselrichter (1) und Traktionstransformator (3) von der Bahnstromfrequenz unterscheidet, insbesondere höher ist, bevorzugt mindestens 400Hz, besonders bevorzugt mehr als 1kHz beträgt.

11. Verfahren nach Anspruch 10, **dadurch gekennzeichnet, dass** die Traktionsbatterie (4) durch Energie aus der Oberleitung über den Stromabnehmer (6) geladen wird.

12. Verfahren nach einem der Ansprüche 10 oder 11, **dadurch gekennzeichnet, dass** der Traktionstransformator (3) eine zweite sekundäre Wicklung (19) umfasst, die insbesondere auf 1kV oder 1.5kV Wechselspannung ausgelegt ist, wobei die zweite Sekundäre Wicklung (19) mit einer Zugsammelschiene (20) verbunden ist und die Traktionsbatterie (4) über die Zugsammelschiene (20) mit dem elektrischen Strom geladen wird.

13. Verfahren nach einem der Ansprüche 10 bis 12, **dadurch gekennzeichnet, dass** das Schienenfahrzeug (15) wahlweise über den Wechselstrom-Stromabnehmer (6) oder über den Gleichstrom-Stromabnehmer (10) mit Energie versorgt wird.

14. Verfahren nach einem der Ansprüche 10 bis 13, **dadurch gekennzeichnet, dass** die Energie für die Traktion des Schienenfahrzeugs (15) wahlweise durch den Stromabnehmer (6, 10) oder durch die Traktionsbatterie (4) bereitgestellt wird.

15. Verfahren nach einem der Ansprüche 10 bis 14, **dadurch gekennzeichnet, dass** der zweite Gleichstromzwischenkreis (25) direkt mit Energie aus dem Gleichstrom-Stromabnehmer (10) versorgt wird.
